# EUROPÄISCHE PATENTSCHRIFT

(11) **EP 2 676 281 B1**
(45) Veröffentlichungstag und Bekanntmachung des Hinweises auf die Patenterteilung: **10.12.2014**
(21) Anmeldenummer: 12701443.9
(22) Anmeldetag: 17.01.2012
(51) Int. Cl.: H01G 2/10, H01G 4/32, H01G 9/08

(54) **ANORDNUNG MIT EINEM GEHÄUSE**
ARRANGEMENT HAVING A HOUSING
SYSTÈME ÉQUIPÉ D'UN BOÎTIER

(30) Priorität: 15.02.2011 DE 102011011303; 28.02.2011 DE 102011012631
(43) Veröffentlichungstag der Anmeldung: 25.12.2013
(73) Patentinhaber: Sew-Eurodrive GmbH & Co. KG, 76646 Bruchsal (DE)
(72) Erfinder: SCHMIDT, Josef, 76676 Graben-Neudorf (DE); SCHIFFMANN, Sebastian, 76709 Kronau (DE); HAUCK, Matthias, 68723 Schwetzingen (DE); LAMPERT, Christian, 76646 Bruchsal (DE)
(86) Internationale Anmeldenummer: PCT/EP2012/000182
(87) Internationale Veröffentlichungsnummer: WO 2012/110181

(56) Entgegenhaltungen:
- EP-A2- 0 325 039
- WO-A1-2007/093287
- GB-A- 1 513 348

## Beschreibung

Die Erfindung betrifft eine Anordnung mit einem Gehäuse.

Es sind Elektrolyt-Kondensatoren bekannt, die eine Wicklung aufweisen, die eine positive und negative Elektrode sowie einen Separator aufweist. Das Gehäuse eines solchen Kondensators weist ein topfförmiges Aluminium-Gehäuseteil auf, in welchem die Wicklung angeordnet ist.

**Aus der** EP 0 325 039 A2 **ist eine Kondensatoranordnung bekannt.**

**Aus der** GB 1 513 348 A **ist ein Kondensator bekannt.**

**Aus der** WO 2007/093287 A1 **ist eine mehrfach verwendbare Transporteinheit für Folienrollen bekannt.**

Der Erfindung liegt daher die Aufgabe zugrunde, einen Energiespeicher in kostengünstiger und einfacher Weise mit hoher Leistungsdichte herstellbar zu machen.

Erfindungsgemäß wird die Aufgabe bei der Anordnung nach den in Anspruch 1 angegebenen Merkmalen gelöst.

Wichtige Merkmale der Erfindung bei der Anordnung, insbesondere Kondensatoranordnung, sind, dass sie mit einem Gehäuse ausgeführt ist, das zumindest ein mittleres Gehäuseteil, insbesondere Gehäuseträger, aufweist,
welches Ausnehmungen aufweist,
wobei in einer jeweiligen Ausnehmung jeweils eine Wicklung, insbesondere Kondensatorwicklung, angeordnet ist.

Von Vorteil ist dabei, dass kein separates Gehäuse für jede Wicklung vorgesehen werden muss sondern ein Gehäuseträger, insbesondere mittleres Gehäuseteil, zur Aufnahme der Wicklungen ausbildbar ist, so dass mehrere Wicklungen aufnehmbar sind. Insbesondere ist hierbei ein ebene Anordnung von Wicklungen im Gehäuseträger vorsehbar, wobei jeder Wicklung eine Ausnehmung zugeordnet ist. In Weiterbildung sind die Ausnehmungen auch verbindbar, bilden also insgesamt eine zusammenhängende Ausnehmung, wobei jeder Wicklung ein derartiger hohlzylindrisch ausgeformter Raumteilbereich zuordenbar ist, dass die Wicklungen nach Einführen in die jeweiligen Ausnehmungen voneinander beabstandet sind. Außerdem ist der Gehäuseträger aus einem elektrisch isolierenden Material herstellbar und somit nur die elektrische Kontaktierung der Wicklung mit Kontaktelementen auszuführen, wobei die Kontaktelemente keine gehäusebildende Funktion ausführen müssen.

Bei einer vorteilhaften Ausgestaltung sind anstelle von zylindrischen Ausnehmungen auch prismatische Ausnehmungen, wobei die Energiespeicherzellen prismatisch ausgeführt sind.

Bei einer vorteilhaften Ausgestaltung ist die Wicklung eine mehrlagige Wicklung, insbesondere mit einer Windungszahl, welche größer ist als 1. Von Vorteil ist dabei, dass eine hohe Kapazität erreichbar ist.

Bei einer vorteilhaften Ausgestaltung weist die Wicklung eine als positive Elektrode ausgeführte Lage auf,
weist die Wicklung eine als negative Elektrode ausgeführte Lage auf,
ist zwischen den Elektroden eine als Separator ausgeführte Lage angeordnet und/oder ist eine als elektrischer Isolator ausgeführte Lage vorgesehen, welche zu einer der Elektroden direkt benachbart angeordnet ist und auf der von dem Separator abgewandten Seite dieser Elektrode angeordnet ist. Von Vorteil ist dabei, dass jede Wicklung als Doppelschichtkondensator fungiert und somit eine hohe Kapazität erreichbar ist.

Beispielsweise ist der Energiespeicher als Lithium-Ionen-Akkuzellen-Energiespeicher ausführbar.

Bei einer vorteilhaften Ausgestaltung sind die die Wicklungen aufnehmenden Ausnehmungen jeweils mit Elektrolyt befüllt. Von Vorteil ist dabei, dass der Gehäuseträger gehäusebildende Funktion auch für den Elektrolyt der Kondensatoranordnung ausführt. Auf diese Weise ist also ein kompakte Elektrolyt-Kondensator Anordnung herstellbar. Außerdem ist ein kostspieliges Aluminium durch Kunststoff ersetzbar.

Erfindungsgemäß sind die positive und negative Elektrode einer Wicklung jeweils mit einer jeweiligen Kontaktplatte elektrisch verbunden, insbesondere druck- und/oder schweißverbunden. Von Vorteil ist dabei, dass eine Kontaktierung in einfacher Weise ausführbar ist. Außerdem ist die Kontaktplatte derart ausgedehnt ausführbar, dass sie den Wicklungsbereich überragt und einen benachbarten Wicklungsbereich, wodurch die Kontaktplatte nicht nur zur elektrischen Kontaktierung sondern auch zur Verschaltung, also elektrischen Verbindung der Wicklungen, verwendbar ist. Mit einer entsprechend angeordneten und elektrisch verbundenen Anzahl von Kontaktplatten ist also eine Reihenschaltung oder Parallelschaltung von Wicklungen ausführbar.

Bei einer vorteilhaften Ausgestaltung fungieren die Kontaktplatten als Verschaltungsmittel zur Herstellung einer Reihenschaltung oder Parallelschaltung der Kondensatorwicklungen,

insbesondere wobei zur Herstellung einer Parallelschaltung
- mit einer Kontaktplatte die positiven Elektroden mindestens zweier, in Ausnehmungen, insbesondere verschiedenen und/oder zueinander separaten Ausnehmungen, angeordneter Wicklungen elektrisch verbunden sind
   und
- mit einer anderen Kontaktplatte die negativen Elektroden derselben Wicklungen elektrisch verbunden sind, insbesondere wobei die andere Kontaktplatte auf der von der ersten Kontaktplatte abgewandten Seite der Wicklungen angeordnet sind,

insbesondere wobei zur Herstellung einer Reihenschaltung bei gleichartig polarisierbaren Zellen
- mit jeweils einer Kontaktplatte die positive Elektrode einer Wicklung mit der negativen Elektrode einer anderen Wicklung elektrisch verbunden ist.
   und
- mit jeweils einer anderen Kontaktplatte die negative Elektrode der Wicklung mit der positiven Elektrode einer anderen Wicklung elektrisch verbunden ist, wobei die Kontaktplatten jeweils auf voneinander abgewandten Seiten der Wicklungen angeordnet sind, wobei die Wicklungen jeweils umgekehrt zueinander ausgerichtet in die Ausnehmungen eingebracht sind, um positive und negative Elektroden zweier Wicklungen auf einer Seite miteinander verbinden zu können. Bei Verwendung von umgekehrt polarisierbaren Zellen können die Zellen jedoch auch gleich ausgerichtet in die Ausnehmungen eingebracht werden.

Von Vorteil ist dabei, dass die Verschaltung in einfacher und kostengünstiger Weise durch die Kontaktplatten, also die Mittel für die Kontaktierung der Elektroden der Wicklungen, herstellbar ist.

Bei einer vorteilhaften Ausgestaltung weist das Gehäuse der Anordnung ein Gehäuseunterteil und ein Gehäuseoberteil auf, die jeweils mit dem mittleren Gehäuseteil verbunden sind und zwischen denen das mittlere Gehäuseteil angeordnet ist. Von Vorteil ist dabei, dass die gehäusebildende Funktion von Kunststoffteilen ausführbar ist und somit nur geringe Mengen an Metall notwendig sind. Da die gehäusebildenden Funktionen der Energiespeicherzellen aus elektrisch isolierendem Material bestehen, sind keine weiteren Maßnahmen zur elektrischen Isolation innerhalb Energiespeicherzellenanordnung, wie z.B. zusätzliche Isolierungen oder Spannungsabstände, notwendig. Dadurch ist eine erhöhte Packungsdichte der Energiespeicherzellenanordnung erreichbar.

Sonst übliche gehäusebildenden Fertigungsschritte wie das Einfügen des Wickels in das topfförmige Aluminium-Gehäuseteil und anschließendes Bördeln können entfallen.

Erfindungsgemäß ist mit einer Kontaktplatte ein Kontaktierungselement elektrisch verbunden, welches durch eine Ausnehmung im Gehäuseunterteil hindurchragt,

insbesondere wobei mit einer anderen Kontaktplatte ein anderes Kontaktierungselement elektrisch verbunden ist, welches durch eine Ausnehmung im Gehäuseoberteil hindurchragt. Von Vorteil ist dabei, dass eine einfache Durchführung des Anschlusskontakts durch das Gehäuseunterteil beziehungswiese Gehäuseoberteil ausführbar ist.

Erfindungsgemäß ist das Kontaktierungselement ein Schraubteil, welches in eine Gewindebohrung des mittleren Gehäuseteils eingeschraubt ist,

insbesondere wobei das Schraubteil mit einer Kontaktplatte elektrisch verbunden ist. Von Vorteil ist dabei, dass eine einfache Kontaktierung durch ein Befestigungselement erreichbar ist. Denn das Schraubteil bewirkt die Schraubverbindung der Gehäuseteile, also des mittleren Gehäuseteils, insbesondere Gehäuseträgers, mit dem Gehäuseunterteil beziehungsweise Gehäuseoberteil. Zusätzlich wird durch das Schraubteil die elektrische Verbindung mit der Kontaktplatte ausgeführt.

Bei einer vorteilhaften Ausgestaltung ist die Kontaktplatte und/oder der Schraubstift aus Aluminium gefertigt. Der Schraubstift ist dabei ein Schraubteil, weist also einen Schraubverzahnungsabschnitt auf. Von Vorteil ist dabei, dass eine hohe elektrische Leitfähigkeit einsetzbar ist bei geringen Kosten. Die Durchführung des Schraubstiftes durch die Ausnehmung des Gehäuseunterteils beziehungswiese Gehäuseoberteils ist mittels eines Dichtelements abgedichtet ausgeführt oder der Schraubstift ist eingepresst in die Ausnehmung, wobei beim Einpressen eine elastische Verformung des Kunststoffmaterials des Gehäuseunterteils beziehungswiese Gehäuseoberteils bewirkt wird, so dass eine dichte Durchführung des Stiftes durch diese Gehäuseteile jeweils erreicht ist.

Da die Energiespeicherzellen direkt bei der Herstellung in das Energiespeichermodul integriert werden, können Prozessschritte zur Zwischenlagerung und Weitertransport der Energiespeicherzellen, wie z.B. das Gurten der Speicherzellen, entfallen.

Weiterhin ist dadurch eine chargenreine Bestückung der Energiespeichermodule einfacher realisierbar. Dies ist insofern von Bedeutung, als das Bauteile derselben Charge geringere Fertigungstoleranzen zueinander haben. Aus Symmetriegründen ist bei Energiespeichermodulen eine möglichst gering zueinander schwankende Kapazität der Energiespeicherzellen herstellbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Anordnung in Explosionsdarstellung gezeigt.
In der Figur 2 ist ein Querschnitt durch die Anordnung gezeigt.
In der Figur 3 ist ein vergrößerter Ausschnitt hiervon gezeigt.
In der Figur 4 eine alternative erfindungsgemäße Anordnung in Explosionsanordnung gezeigt, wobei Schraubstifte 12 verwendet sind.
In der Figur 5 ist ein zugehöriger Querschnitt gezeigt.
In der Figur 6 ist ein vergrößerter Ausschnitt hiervon gezeigt.

Dabei ist ein mittleres Gehäuseteil 6 beidseitig mit Deckelteilen gehäusebildend verschlossen, wobei ein erstes Deckelteil als Gehäuseunterteil 1 und ein zweiten Deckelteil als Gehäuseoberteil 13 ausgebildet ist. Diese Deckelteile sind mittels jeweiliger Dichtungen (2, 8) in hoher Schutzart verbunden mit dem mittleren Gehäuseteil 6.

Das mittlere Gehäuseteil 6, das Gehäuseunterteil 1 und das Gehäuseoberteil 13 sind jeweils aus einem elektrisch isolierenden, vorzugsweise gut wärmeleitendem Material gefertigt. Besonders bevorzugt wird hierbei Kunststoff eingesetzt, der eine möglichst hohe Wärmeleitfähigkeit aufweist.

Das Gehäuseunterteil 1 ist mittels Verbindungsschrauben 3 schraubverbunden mit dem mittleren Gehäuseteil 6, wobei die Schrauben 3 vom vom mittleren Gehäuseteil 6 umschlossenen Innenbereich aus gesehen außerhalb der Dichtung 2 angeordnet sind.

Das Gehäuseoberteil 13 ist mittels Verbindungsschrauben 10 schraubverbunden mit dem mittleren Gehäuseteil 6, wobei die Schrauben 10 vom vom mittleren Gehäuseteil 6 umschlossenen Innenbereich aus gesehen außerhalb der Dichtung 8 angeordnet sind.

Das mittlere Gehäuseteil 6 weist Ausnehmungen 7 auf, in welchen Wicklungen 5 angeordnet sind. Jede Wicklung 5 ist mehrlagig ausgeführt, wobei eine erste Lage als positive Elektrode fungiert, eine hierzu direkt benachbarte Lage als Separator 21 ausgebildet ist und eine wiederum hierzu weiter benachbarte Lage als negative Elektrode fungiert, wobei eine hierzu wiederum benachbarte Lage als elektrischer Isolator ausgeführt ist.

Vorzugsweise sind die Elektroden jeweils als Metallfolie, insbesondere als Aluminiumfolie oder Kupferfolie, ausgeführt und der Separator 21 ist als poröses Material, insbesondere Kohlenstoff-haltiges Material, ausgeführt, das mit Elektrolyt-Flüssigkeit getränkt ist.

Die Kontaktierung einer der beiden Elektroden 20 erfogt über die Kontaktplatte 4 und die Kontaktierung der anderen Elektrode 22 erfolgt über die Kontaktplatte 9, welche an der in axialer Richtung der Wicklungsachse anderen Seite des mittleren Gehäuseteils 6 angeordnet ist. Dabei ist vorzugsweise eine Schweißverbindung vorgesehen.

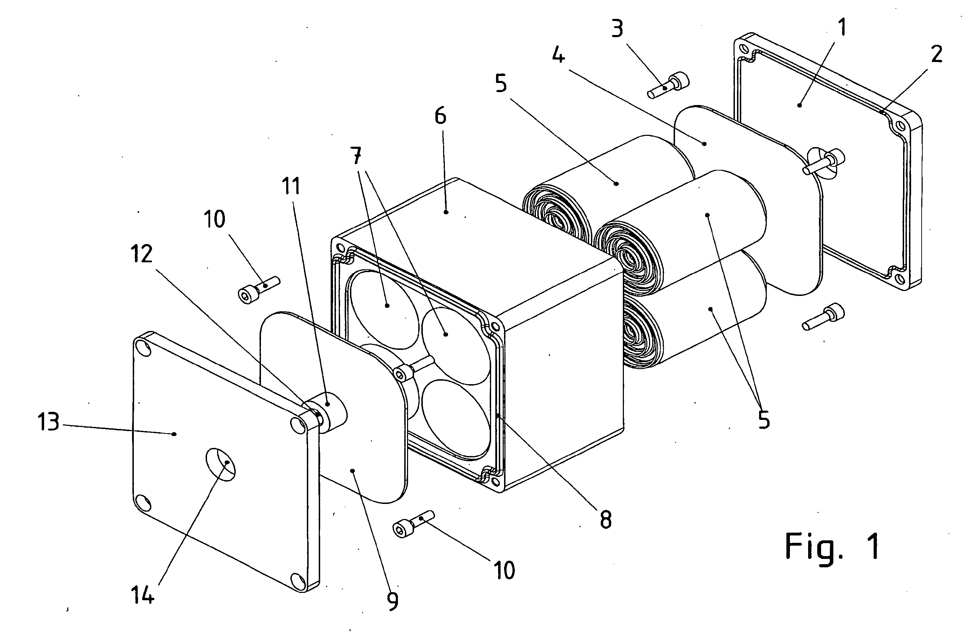

Die in Wicklungsachsrichtung gesehen, axial vordere und hintere Kontaktplatte (4, 9) sind dabei weiter ausgedehnt, insbesondere in derjenigen Ebene, zu welcher die Wicklungsachse die Normalenrichtung darstellt, als die in den Ausnehmungen 7 angeordneten Wicklungen 5. Somit ist sogar eine Verschaltung der Wicklungen 5 ermöglicht. Gemäß Figur 1 werden die positiven Elektroden parallel geschaltet und die negativen Elektroden mit der anderen Kontaktplatte parallel geschaltet.

Da die Ausnehmungen 7 in dem elektrisch isolierenden Material des mittleren Gehäuseteils 6 eingebettet sind, welches außerdem chemisch inert ist, insbesondere chemisch nicht reagiert mit den in der Wicklung 5 verwendeten Chemikalien, insbesondere mit dem Elektrolyt und seinen Bestandteilen, ist ein für jede Wicklung separates Gehäuse verzichtbar.

Die Wicklungen 5 sind also gehäusebildend umgeben von dem mittleren Gehäuseteil 6 und zumindest teilweise von den Kontaktplatte (4, 9). Gehäuseunterteil 1 und Gehäuseoberteil 13 tragen ebenfalls zur gehäusebildenden Funktion bei.

An den Kontaktplatten (4, 9) sind jeweils Stiftaufnahmen 11 angeordnet, mittels derer ein jeweiliger Schraubstift 12 mit der Kontaktplatte (4, 9) elektrisch verbunden ist. Diese Schraubstifte 12 sind durch eine Ausnehmung 14 im elektrisch isolierenden Gehäuseunterteil 1 und eine entsprechende Ausnehmung im elektrisch isolierenden Gehäuseoberteil 13 durchgeführt, so dass eine elektrische Kontaktierung von außen ermöglicht ist.

Vorzugsweise sind die Ausnehmungen 7 mit Elektrolyt befüllt, so dass bei der Fertigung die jeweilige Wicklung eingeschoben wird in die jeweilige Ausnehmung 7 und dann die Befüllung mit Elektrolyt erfolgt.

In einem weiteren erfindungsgemäßen Ausführungsbeispiel ist statt der elektrischen Kontaktierung durch die Schraubstifte 12 eine Schraubteil durch die Ausnehmung 14 im Gehäuseoberteil 13 beziehungsweise im Gehäuseunterteil 1 geführt und in eine Gewindebohrung, insbesondere Sacklochgewindebohrung, im mittleren Gehäuseteil 6 eingeschraubt, wobei das Schraubteil metallisch ausgeführt ist und dabei gleichzeitig die Kontaktplatte berührt, so dass eine elektrische Kontaktierung ausgeführt ist mit der Kontaktplatte und das Schraubteil nach außen ragt zur elektrischen Kontaktierung von außen her. In Weiterbildung sind sogar die Verbindungsschrauben (3, 10) aus Figur 1 entbehrlich.

In einem weiteren erfindungsgemäßen Ausführungsbeispiel ist auch eine Reihenschaltung der Wicklungen ausführbar, indem die in Wicklungsachsrichtung vordere Kontaktplatte den Bereich einer ersten und einer zweiten Wicklung überragt und dort mit der positiven Elektrode elektrisch verbunden ist, insbesondere verschweißt, und indem die hintere Kontaktplatte den Bereich der ersten und einer dritten Wicklung überragt und dort jeweils mit der negativen Elektrode schweißverbunden ist, insbesondere nicht aber mit der Elektrode der zweiten Wicklung. Auf diese Weise ist also eine Reihenschaltung der Wicklungen und somit eine höhere Ausgangsspannung bereitstellbar.

In einem weiteren erfindungsgemäßen Ausführungsbeispiel ist die Kontaktplatte mit einer derart dünnen Wandstärke ausführbar, so dass die Kontaktplatte als Metallfolie ausführbar ist, insbesondere als Aluminiumfolie. Infolge der elastischen Verformbarkeit der Folie ist eine Kompensation thermisch oder herstellungsbedingter Toleranzen einfach erreichbar.

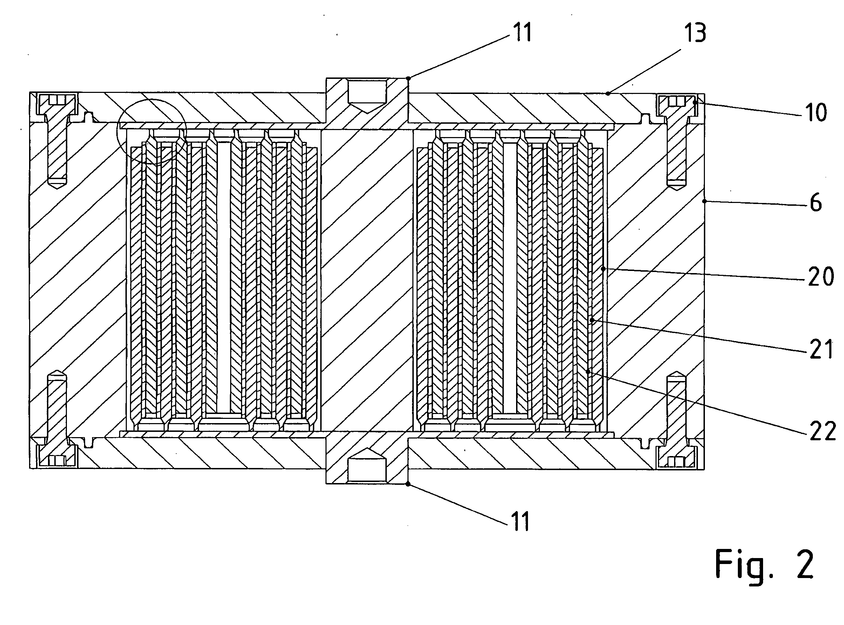

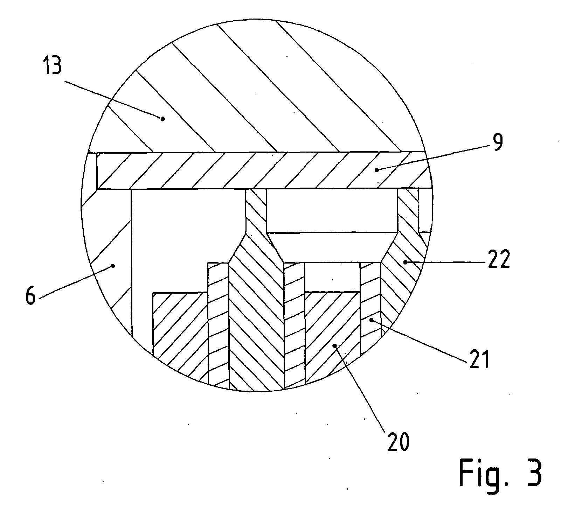

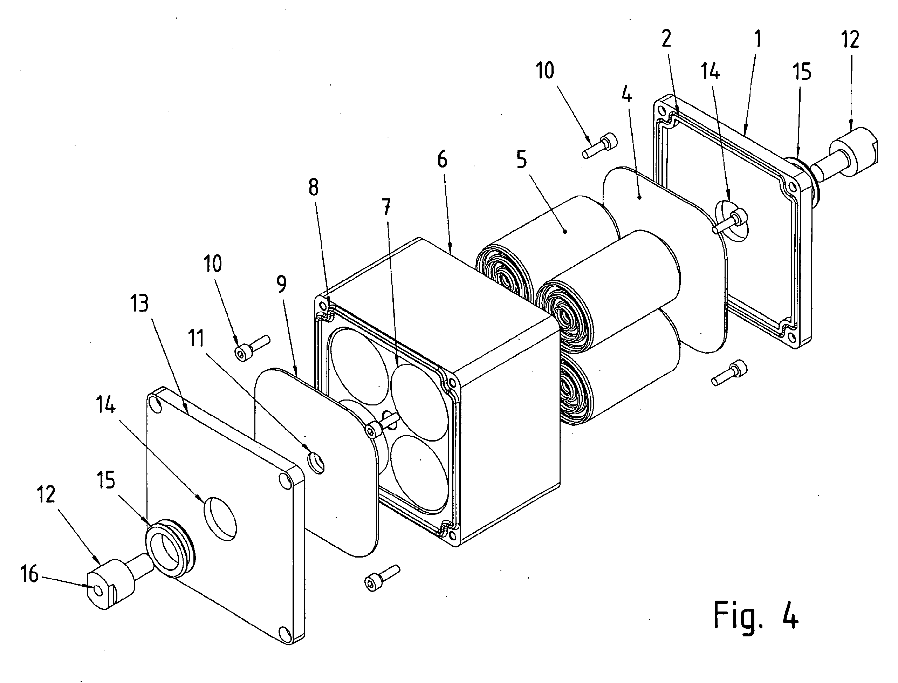

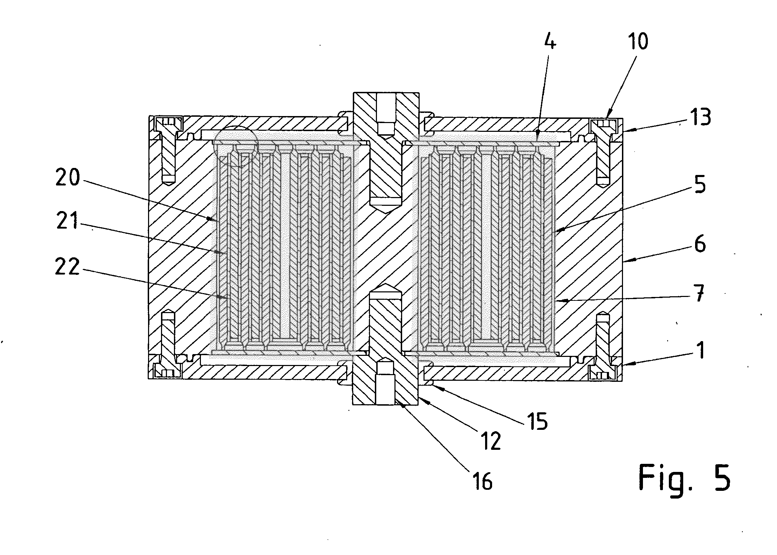

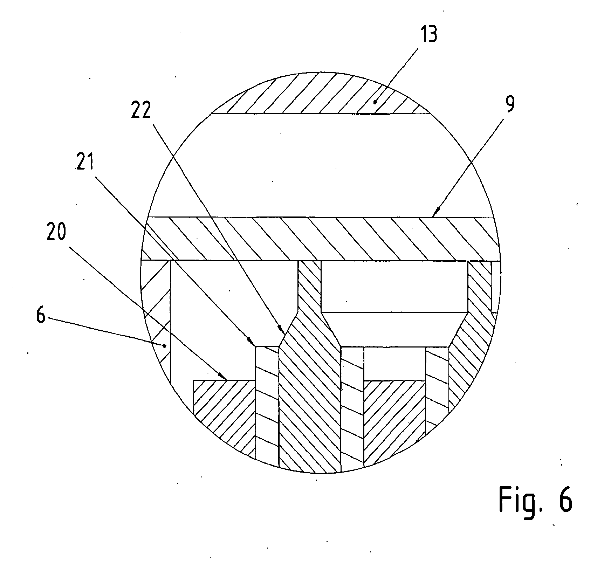

In den Figuren 4, 5 und 6 ist ein weiteres Ausführungsbeispiel gezeigt, wobei im Unterschied zum Ausführungsbeispiel nach den Figuren 1, 2 und 3 eine Durchführungstülle 15, insbesondere aus Kunststoff, zwischen dem Schraubstift 12 und dem Gehäuseoberteil 13 angeordnet ist.

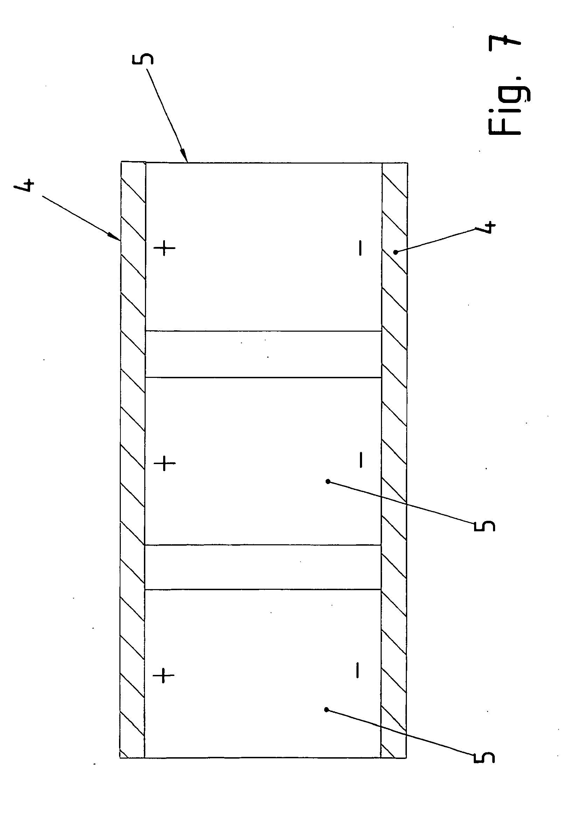

In der Figur 7 ist das Prinzip der Verschaltung bei Parallelschaltung gezeigt. Dabei sind mittels einer Kontaktplatte 4 die positiven Elektroden von in drei, zueinander separaten Ausnehmungen angeordneten Wicklungen 5 elektrisch verbunden. Außerdem sind mittels einer anderen Kontaktplatte 4 die negativen Elektroden derselben Wicklungen 5 elektrisch verbunden. Die andere Kontaktplatte 4 ist auf der von der ersten Kontaktplatte 4 abgewandten Seite der Wicklungen 5 angeordnet.

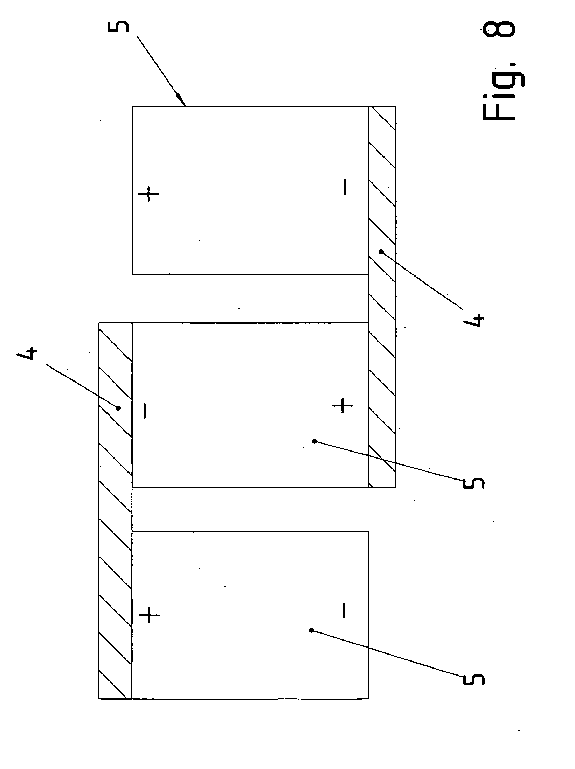

In der Figur 8 ist das Prinzip der Verschaltung bei Reihenschaltung bei gleichartig polarisierbaren Zellen, also jeweilige mit einer jeweiligen Wicklung 5 befüllte Ausnehmungen 7, wobei mit jeweils einer Kontaktplatte 4 die positive Elektrode einer mittleren Wicklung 5 mit der negativen Elektrode einer anderen Wicklung 5 elektrisch verbunden ist. Dabei ist mit jeweils einer anderen Kontaktplatte 4 die negative Elektrode der Wicklung mit der positiven Elektrode einer anderen Wicklung 5 elektrisch verbunden ist, wobei die Kontaktplatten 4 jeweils auf voneinander abgewandten Seiten der Wicklungen 5 angeordnet sind, wobei die Wicklungen jeweils umgekehrt zueinander ausgerichtet in die Ausnehmungen 7 eingebracht sind, um positive und negative Elektroden zweier Wicklungen 5 auf einer Seite miteinander verbinden zu können. Bei einem anderen erfindungsgemäßen Ausführungsbeispiel werden umgekehrt polarisierte Zellen verwendet und somit können die Zellen jedoch auch gleichartig ausgerichtet, insbesondere parallel ausgerichtet, in die Ausnehmungen 7 eingebracht werden.

Bei weiteren erfindungsgemäßen Ausführungsbeispielen werden statt der Kondensatorwicklungen Akkumulatorwicklungen eingesetzt. Dabei ist der Aufbau sehr ähnlich und weist wiederum Elektroden und Separatoren auf, wobei andere Materialien-Kombinationen verwendet werden.

### Bezugszeichenliste

- 1: Gehäuseunterteil
- 2: Dichtung
- 3: Verbindungsschraube
- 4: Kontaktplatte
- 5: Wicklung
- 6: Gehäuseteil
- 7: Ausnehmung
- 8: Dichtung
- 9: Kontaktplatte
- 10: Verbindungsschraube
- 11: Stiftaufnahme
- 12: Schraubstift
- 13: Gehäuseoberteil
- 14: Ausnehmung
- 15: Durchführungstülle
- 22: positive Elektrode
- 20: negative Elektrode
- 21: Separator

## Patentansprüche

1. Energiespeicherzellenanordnung mit einem Gehäuse, das **ein Gehäuseunterteil (1), ein Gehäuseoberteil (13) und** ein mittleres Gehäuseteil (6) **als** Gehäuseträger aufweist,
**wobei das mittlere Gehäuseteil (6) beidseitig gehäusebildend verschlossen ist mittels des Gehäuseunterteils (1) und des Gehäuseoberteils (13),**
welches Ausnehmungen (7, 14) aufweist,
**wobei** in einer jeweiligen Ausnehmung (7, 14) jeweils eine Wicklung (5), insbesondere Akkumulatorwicklung oder Kondensatorwicklung, angeordnet ist,
**wobei das Gehäuseunterteil (1) mittels einer ersten Dichtung (2) verbunden ist mit dem mittleren Gehäuseteil (6),**
wobei das Gehäuseoberteil (13) mittels einer zweiten Dichtung (8) verbunden ist mit dem mittleren Gehäuseteil (6),
wobei das Gehäuseunterteil (1) mittels Verbindungsschrauben (3) schraubverbunden mit dem mittleren Gehäuseteil (6), wobei die Schrauben (3) vom vom mittleren Gehäuseteil (6) umschlossenen Innenbereich aus gesehen außerhalb der ersten Dichtung (2) angeordnet sind,
wobei das Gehäuseoberteil (13) mittels Verbindungsschrauben (10) schraubverbunden ist mit dem mittleren Gehäuseteil (6), wobei die Schrauben (10) vom vom mittleren Gehäuseteil (6) umschlossenen Innenbereich aus gesehen außerhalb der Dichtung (8) angeordnet sind,
wobei die positive und negative Elektrode (22, 20) einer Wicklung (5) jeweils mit einer jeweiligen Kontaktplatte (4, 9) elektrisch verbunden, insbesondere schweißverbunden, sind
wobei ein Kontaktierungselement mit einer Kontaktplatte (4, 9) elektrisch verbunden ist, welches durch eine Ausnehmung (7, 14) im Gehäuseunterteil (1) hindurchragt,
wobei das Kontaktierungselement ein Schraubteil ist, welches in eine Gewindebohrung des mittleren Gehäuseteils (6) eingeschraubt ist.

2. Anordnung nach mindestens einem der vorangegangenen Ansprüche,
**dadurch gekennzeichnet, dass**
die Wicklung (5) eine mehrlagige Wicklung (5) ist, insbesondere mit einer Windungszahl, welche größer ist als 1.

3. Anordnung nach mindestens einem der vorangegangenen Ansprüche,
**dadurch gekennzeichnet, dass**
die Wicklung (5) eine als positive Elektrode (22) ausgeführte Lage aufweist,
die Wicklung (5) eine als negative Elektrode (20) ausgeführte Lage aufweist,
zwischen den Elektroden (22, 20) eine als Separator (21) ausgeführte Lage aufweist und/oder eine als elektrischer Isolator ausgeführte Lage aufweist, welche zu einer der Elektroden (22, 20) direkt benachbart angeordnet ist und auf der von dem Separator (21) abgewandten Seite dieser Elektrode (22, 20) angeordnet ist.

4. Anordnung nach mindestens einem der vorangegangenen Ansprüche,
**dadurch gekennzeichnet, dass**
die die Wicklungen (5) aufnehmenden Ausnehmungen (7, 14) jeweils mit Elektrolyt befüllt sind.

5. Anordnung nach mindestens einem der vorangegangenen Ansprüche,
**dadurch gekennzeichnet, dass**
die Kontaktplatten (4, 9) als Verschaltungsmittel zur Herstellung einer Reihenschaltung oder Parallelschaltung der Akkumulatorwicklungen beziehungsweise Kondensatorwicklungen fungieren,
insbesondere wobei zur Herstellung einer Parallelschaltung
- mit einer Kontaktplatte (4, 9) die positiven Elektroden (22) mindestens zweier, in Ausnehmungen (7, 14), insbesondere verschiedenen und/oder zueinander separaten Ausnehmungen (7, 14), angeordneter Wicklungen (5) elektrisch verbunden sind und
- mit einer anderen Kontaktplatte (4, 9) die negativen Elektroden (20) dieser Wicklungen (5) elektrisch verbunden sind, insbesondere wobei die andere Kontaktplatte (4, 9) auf der von der ersten Kontaktplatte (4, 9) abgewandten Seite der Wicklungen (5) angeordnet sind,

6. Anordnung nach mindestens einem der vorangegangenen Ansprüche,
**dadurch gekennzeichnet, dass**
zur Herstellung einer Reihenschaltung
- mit jeweils einer Kontaktplatte (4, 9) die positive Elektrode (22) einer ersten Wicklung (5) mit der negativen Elektrode (20) einer anderen Wicklung (5) elektrisch verbunden ist,
und
mit jeweils einer anderen Kontaktplatte (4, 9) die negative Elektrode (20) der ersten Wicklung (5) mit der positiven Elektrode (22) der anderen Wicklung (5) elektrisch verbunden ist, wobei die Kontaktplatten (4, 9) jeweils auf voneinander abgewandten Seiten der Wicklungen (5) angeordnet sind, wobei die Wicklungen (5) jeweils umgekehrt zueinander ausgerichtet in die Ausnehmungen (7, 14) eingebracht sind, um positive und negative Elektroden (22, 20) zweier Wicklungen (5) auf einer Seite miteinander verbinden zu können.

7. Anordnung nach mindestens einem der vorangegangenen Ansprüche,
**dadurch gekennzeichnet, dass**
das Gehäuse der Anordnung ein Gehäuseunterteil (1) und ein Gehäuseoberteil (13) aufweist, die jeweils mit dem mittleren Gehäuseteil (6) verbunden sind und zwischen denen das mittlere Gehäuseteil (6) angeordnet ist.

8. Anordnung nach mindestens einem der vorangegangenen Ansprüche,
**dadurch gekennzeichnet, dass**
die Kontaktplatte (4, 9) und/oder der Schraubteil aus Aluminium gefertigt ist.

## Claims

1. An energy storage cell arrangement having a housing which has a housing lower part (1), a housing upper part (13) and a middle housing part (6), as a housing support,
wherein the middle housing part (6) is closed on both sides by means of the housing lower part (1) and the housing upper part (13) in a manner to form a housing,
which housing has cutouts (7, 14),
wherein a winding (5), in particular accumulator winding or capacitor winding, is in each case arranged in a respective cutout (7, 14),
wherein the housing lower part (1) is connected to the middle housing part (6) by means of a first seal (2),
wherein the housing upper part (13) is connected to the middle housing part (6) by means of a second seal (8),
wherein the housing lower part (1) is screw-connected by means of connecting screws (3) to the middle housing part (6), wherein the screws (3) are, viewed from the inner region surrounded by the middle housing part (6), arranged outside of the first seal (2),
wherein the housing upper part (13) is screw-connected by means of connecting screws (10) to the middle housing part (6), wherein the screws (10) are, viewed from the inner region surrounded by the middle housing part (6), arranged outside of the seal (8),
wherein the positive and negative electrode (22, 20) of a winding (5) are in each case electrically connected to a respective contact plate (4, 9), in particular weld connected,
wherein a contacting element is electrically connected to a contact plate (4, 9,), which contacting element projects through a cutout (7, 14) in the housing lower part (1),
wherein the contacting element is a screw part which is screwed into a threaded hole of the middle housing part (6).

2. An arrangement according to at least one of the preceding claims, **characterized in that** the winding (5) is a multi-layer winding (5), in particular with a number of turns greater than 1.

3. An arrangement according to at least one of the preceding claims, **characterized in that** the winding (5) has a layer in the form of a positive electrode (22),
the winding (5) has a layer in the form of a negative electrode (20),
between the electrodes (22, 20) has a layer in the form of a separator (21) and/or has a layer in the form of an electrical insulator, which is arranged directly adjacent to one of the electrodes (22, 20) and which is arranged on the side, remote from the separator (21), of this electrode (22, 20).

4. An arrangement according to at least one of the proceeding claims, **characterized in that** the cutouts (7, 14) receiving the windings (5) are in each case filled with electrolyte.

5. An arrangement according to at least one of the preceding claims, **characterized in that** the contact plates (4, 9) act as interconnecting means to produce a series connection or parallel connection of the accumulator windings or capacitor windings,
in particular wherein for manufacture of a parallel connection
- the positive electrodes (22) of at least two windings (5) arranged in cutouts (7, 14), in particular cutouts (7, 14) which are different and/or separate from one another, are electrically connected with a contact plate (4, 9),
and
- the negative electrodes (20) of these windings (5) are electrically connected with another contact plate (4, 9), in particular wherein the other contact plate (4, 9) is arranged on the side, remote from the first contact plate (4, 9), of the windings (5)

6. An arrangement according to at least one of the proceeding claims, **characterized in that** to produce a series connection
- the positive electrode (22) of a first winding (5) is electrically connected to the negative electrode (20) of another winding (5) with a contact plate (4, 9) in each case,
and
- the negative electrode (20) of the first winding (5) is electrically connected to the positive electrode (22) of the other winding (5) with another contact plate (4, 9) in each case, wherein the contact plates (4, 9) are in case arranged on sides, remote from one another, of the windings (5), wherein the windings (5) are introduced into the cutouts (7, 14) so as to be directed opposite to one another in each case, in order to be able to connect positive and negative electrodes (22, 20) of two windings (5) to one another on one side.

7. An arrangement according to at least one of the preceding claims, **characterized in that** the housing of the arrangement has a housing lower part (1) and a housing upper part (13), which are in each case connected to the middle housing part (6) and between which the middle housing part (6) is arranged.

8. An arrangement according to at least one of the preceding claims, **characterized in that** the contact plate (4, 9) and/or the screw part is/are manufactured from aluminum.

## Revendications

1. Agencement de cellules accumulatrices d'énergie, équipé d'un boîtier composé d'une partie inférieure (1), d'une partie supérieure (13) et d'une partie médiane (6) constituant un support dudit boîtier,
ladite partie médiane (6) du boîtier étant obturée des deux côtés au moyen de ladite partie inférieure (1) du boîtier et de ladite partie supérieure (13) dudit boîtier, en formant un réceptacle,
ledit boîtier étant percé d'évidements (7, 14),
un enroulement (5) respectif, en particulier un enroulement accumulateur ou un enroulement condenseur, étant logé dans un évidement (7, 14) respectif,
la partie inférieure (1) du boîtier étant reliée à la partie médiane (6) dudit boîtier au moyen d'une première garniture d'étanchement (2),
la partie supérieure (13) du boîtier étant reliée à ladite partie médiane (6) du boîtier au moyen d'une seconde garniture d'étanchement (8),
ladite partie inférieure (1) du boîtier étant reliée par vissage à ladite partie médiane (6) du boîtier au moyen de vis de solidarisation (3), lesdites vis (3) étant situées à l'extérieur de la première garniture d'étanchement (2) en considérant à partir de la région intérieure confinée par ladite partie médiane (6) du boîtier,
ladite partie supérieure (13) du boîtier étant reliée par vissage à ladite partie médiane (6) du boîtier au moyen de vis de solidarisation (10), lesdites vis (10) étant situées à l'extérieur de la garniture d'étanchement (8) en considérant à partir de la région intérieure confinée par ladite partie médiane (6) du boîtier,
les électrodes positive et négative (22, 20) d'un enroulement (5) respectif étant connectées électriquement, notamment raccordées par soudage à une platine de contact (4, 9) respective,
un élément d'instauration d'un contact, connecté électriquement à une platine de contact (4, 9), traversant un évidement (7, 14) pratiqué dans la partie inférieure (1) du boîtier, ledit élément d'instauration d'un contact se présentant comme une pièce vissable qui est vissée dans un perçage taraudé de la partie médiane (6) dudit boîtier.

2. Agencement selon au moins l'une des revendications précédentes,
**caractérisé par le fait que**
l'enroulement (5) est un enroulement (5) à couches multiples présentant, en particulier, un nombre de spires supérieur à 1.

3. Agencement selon au moins l'une des revendications précédentes,
**caractérisé par le fait que**
l'enroulement (5) comporte une couche réalisée en tant qu'électrode positive (22),
ledit enroulement (5) comporte une couche réalisée en tant qu'électrode négative (20), comporte, entre lesdites électrodes (22, 20), une couche réalisée en tant que séparateur (21)
et/ou comporte une couche réalisée en tant qu'isolateur électrique occupant une position directement voisine de l'une desdites électrodes (22, 20), et situé du côté de cette électrode (22, 20) qui pointe à l'opposé dudit séparateur (21).

4. Agencement selon au moins l'une des revendications précédentes,
**caractérisé par le fait que**
les évidements (7, 14), recevant les enroulements (5), sont respectivement emplis d'électrolyte.

5. Agencement selon au moins l'une des revendications précédentes,
**caractérisé par le fait que**
les platines de contact (4, 9) remplissent la fonction de moyens de branchement conçus pour instaurer un montage en série ou un montage en parallèle des enroulements accumulateurs, respectivement des enroulements condenseurs,
sachant notamment que, pour instaurer un montage en parallèle,
- les électrodes positives (22) d'au moins deux enroulements (5) logés dans des évidements (7, 14), en particulier des évidements (7, 14) différents et/ou distincts les uns des autres, sont connectées électriquement à une platine de contact (4, 9)
et
- les électrodes négatives (20) de ces enroulements (5) sont connectées électriquement à une autre platine de contact (4, 9), ladite autre platine de contact (4, 9) étant alors notamment située du côté desdits évidements (5) qui pointe à l'opposé de la première platine de contact (4, 9).

6. Agencement selon au moins l'une des revendications précédentes,
**caractérisé par le fait que**,
pour instaurer un montage en série,
- l'électrode positive (22) d'un premier enroulement (5) est connectée électriquement à une platine de contact (4, 9) respective, avec l'électrode négative (20) d'un autre enroulement (5),
et
- l'électrode négative (20) dudit premier enroulement (5) est connectée électriquement à une autre platine de contact (4, 9) respective, avec l'électrode positive (22) dudit autre enroulement (5), lesdites platines de contact (4, 9) étant alors respectivement situées sur des côtés desdits enroulements (5) qui pointent à l'opposé l'un de l'autre, sachant que lesdits enroulements (5) sont respectivement insérés dans les évidements (7, 14) avec orientation en sens inverse pour pouvoir raccorder mutuellement, d'un côté, des électrodes positives et négatives (22, 20) de deux enroulements (5).

7. Agencement selon au moins l'une des revendications précédentes,
**caractérisé par le fait que**
le boîtier de cet agencement comprend une partie inférieure (1) et un partie supérieure (13) qui sont respectivement reliées à la partie médiane (6) dudit boîtier, et entre lesquelles ladite partie médiane (6) dudit boîtier est interposée.

8. Agencement selon au moins l'une des revendications précédentes,
**caractérisé par le fait que**
la platine de contact (4, 9) et/ou la pièce vissable est (sont) fabriquée(s) en aluminium.
